# EUROPEAN PATENT APPLICATION

(11) **EP 2 615 678 A1**
(43) Date of publication of application: **17.07.2013**
(21) Application number: 11823510.0
(22) Date of filing: 05.09.2011
(51) Int. Cl.: H01M 10/0525, H01M 4/131, H01M 4/36, H01M 4/505, H01M 4/587, H01M 10/0567, H01M 10/0568, H01M 10/0569

(54) **NONAQUEOUS ELECTROLYTE BATTERY**

(30) Priority: 06.09.2010 JP 2010198748
(71) Applicant: Shin-Kobe Electric Machinery Co., Ltd., Tokyo 104-0044 (JP)
(72) Inventor: TSUJIKAWA, Tomonobu, Tokyo 108-0023 (JP); ARAKAWA, Masayasu, Tokyo 110-0015 (JP); TERADA, Masayuki, Tokyo 104-0044 (JP); HAYASHI, Koji, Tokyo 104-0044 (JP)
(74) Representative: Schiweck, Weinzierl & Koch
(86) International application number: PCT/JP2011/070123
(87) International publication number: WO 2012/033035

(57) **Abstract**

A non-aqueous electrolyte battery capable of flattening of a voltage property and securing safety at a time of battery abnormality is provided. A lithium-ion secondary battery 20 has an electrode group 6 in which a positive and a negative electrode plates are wound. A non-aqueous electrolyte is formed by adding LiBF₄ to a mixed solvent of EC and DMC. In the positive electrode plate, a positive electrode mixture layer W2 including a positive electrode active material is formed at both surfaces of an aluminum foil W1. A lithium manganese magnesium complex oxide having a spinel crystal structure is used as the positive electrode active material. A flame retardant layer W6 including a phosphazene compound is formed at a surface of the positive electrode mixture layer W2. In the negative electrode plate, a negative electrode mixture layer W4 including a negative electrode active material is formed at both surfaces of a rolled copper foil W3. A carbon material that a surface of graphite is coated by pyrolytic carbon is used as the negative electrode active material. The phosphazene compound demonstrates non-flammability, and a voltage property is flattened by the graphite material.

## Description

### FIELD OF THE INVENTION

The present invention relates to a non-aqueous electrolyte battery, and more particularly to a non-aqueous electrolyte battery that a positive electrode having a positive electrode mixture layer including a positive electrode active material and a negative electrode having a negative electrode mixture layer including a negative electrode active material are infiltrated by a non-aqueous electrolyte.

### DESCRIPTON OF RELATED ART

Because a non-aqueous electrolyte battery represented by a lithium-ion secondary battery has a high voltage and a high energy density and is excellent in storage performance and low temperature operation performance, it enables miniaturization or lightening of a power source. For this reason, the non-aqueous electrolyte battery is being widely used in mobile-type electronic products for civilian use. Further, the non-aqueous electrolyte battery is used not only as a miniature power source for mobile use, but it is also being developed as a power source for an electric vehicle and a nighttime power storage facility for home use, and further developed as an industrial power source for utilizing nature energy such as sunshine, wind force or the like efficiently, leveling in use of electric power, uninterruptible power supply apparatuses and construction equipments.

However, an organic solvent such as dimethyl ether or the like is included in an electrolyte used for the non-aqueous electrolyte battery. Because the organicsolvent has a property of inflammability, like in a time of battery abnormality such as shortcut or the like or a time that the battery is thrown into fire, when the battery is exposed to an abnormally high temperature environment in a charging state or when a battery temperature goes up after reaching an overcharged state, a phenomenon may occur that a battery constituting material such as the non-aqueous electrolyte or the like burns. Further, when a separator for separating a positive and negative electrode plates melts and then internal shortcut occurs due to an increase in a battery temperature, a further increase in a battery temperature occurs, and at the same time gas generation due to decomposition of the non-aqueous electrolyte increases an internal pressure in the battery to cause a gas gush out of a cleavage valve formed at a battery container or a battery lid to an exterior. Furthermore, when a temperature increase continues, a thermal runaway occurs due to thermal decomposition of the positive electrode active material, and thus battery behavior is likely to become violent.

In order to avoid such a situation to secure safety of the battery, various safety techniques have been proposed. For example, a technique for making a battery non-flammable by dissolving a flame retardant (non-flammability giving material) into a non-aqueous electrolyte (See JPA 04-184870.), and a technique for making a separator non-flammable by dispersing a flame retardant into the separator (See JPA 2006-127839.) are disclosed.

### SUMMARY OF THE INVENTION

### [Problem to be solved by the Invention]

However, the techniques disclosed in JPA 04-184870 and JPA 2006-127839 are techniques for making a battery constituting material itself such as the non-aqueous electrolyte or separator which contains the flame retardant non-flammable, and accordingly it is difficult to make the battery itself non-flammable. For example, in the technique disclosed in JPA 2006-127839, the separator itself can obtain non-flammability according to an amount of the flame retardant included in the separator. In a case that this technique is applied to a lithium secondary battery, because heat generation becomes large due to a thermal decomposition reaction of an active material in the lithium secondary battery, a large amount of the flame retardant is required in order to restrict an increase in a battery temperature. In the separator including the large amount of the flame retardant, it is difficult to retain strength originally required as a separator. On the other hand, in a case that the flame retardant is added to the non-aqueous electrolyte, an output property or a discharge capacity is likely to drop due to that ionic conductivity in the non-aqueous electrolyte becomes insufficient. In other words, there is a case that improving safety of the battery brings about a drop in battery performance. Further, because stable output is desired in a battery used as a power source for home or industrial use, for example, restricting a voltage drop at final discharge is required, namely, flattening (flatness) of a voltage property is required. Moreover, in a view of supplying electric power stably for a long time, stabilization in the positive and negative electrode active materials is also desired. Accordingly, in developing a power source for home or industrial use, it is important to keep both safety and battery performance at the same time.

In view of the above circumstances, the present invention is to provide a non-aqueous electrolyte battery capable of flattening of a voltage property and securing safety at a time of battery abnormality.

### [Means for solving the Problem]

In order to solve the above problem, the present invention is directed to a non-aqueous electrolyte battery that a positive electrode having a positive electrode mixture layer including a positive electrode active material and a negative electrode having a negative electrode mixture layer including a negative electrode active material are infiltrated by a non-aqueous electrolyte, wherein the positive electrode active material is a lithium manganese transition metal complex oxide, the negative electrode active material is a carbon material mainly constituted by graphite and the non-aqueous electrolyte contains lithium tetrafluoroborate as a lithium salt, and wherein, in the positive electrode, a flame retardant layer including a phosphazene compound of a flame retardant is formed at a surface of one side or both sides of the positive electrode mixture layer.

In the present invention, the lithium manganese transition metal complex oxide maybe replaced by magnesium at apart of a manganese site in a crystal thereof and may have a spinel crystal structure. At this time, the lithium manganese transition metal complex oxide may be expressed by a chemical formula of LiMn₂₋ₓMgₓO₄ and a replacing ratio x of the magnesium in the chemical formula may satisfy 0 < x ≦0.1. Further, the carbon material may be graphite of which surface is coated by pyrolytic carbon. The carbon material may have isotropy. At this time, the carbon material maybe shaped spherically. Further, a thickness of the flame retardant layer may range from 0.075 to 0.2 at a ratio to a thickness of the positive electrode mixture. At this time, in the non-aqueous electrolyte, amixed solvent including at least ethylene carbonate and dimethyl carbonate may be used as an organic solvent for dissolving the lithium salt. At this time, the lithium tetrafluoroborate can be added at a ratio of ranging from 0.8 mol/liter to 1.0 mol/liter to a mixed solvent of ethylene carbonate and dimethyl carbonate. The non-aqueous electrolyte may further contain a phosphazene compound of a flame retardant.

### [Effects of the Invention]

According to the present invention, effects can be obtained that a voltage property can be flattened since the carbon material mainly constituted by graphite is used as the negative electrode active material; manganese elution according to charge/discharge is restricted to stabilize a crystal structure since the lithium manganese transition metal complex oxide is used as the positive electrode active material and lithium tetrafluoroborate as a lithium salt is contained in the non-aqueous electrolyte; and battery behavior becomes calm to secure safety even if a temperature increases due to battery abnormality since the flame retardant exists near the positive electrode active material which is apt to have a large calorific value at a time of battery abnormality due to that the flame retardant layer including the phosphazene compound of a flame retardant is formed at the surface of one side or both sides of the positive electrode mixture layer.

### BRIEF DESCRIPTION OF THE DRAWINGS

Fig. 1 is a sectional view of a cylindrical lithium-ion secondary battery of an embodiment to which the present invention is applicable; and
Fig. 2 is a sectional view illustratively showing particles of a carbon material used as a negative electrode active material for the cylindrical lithium-ion secondary battery of this embodiment.

### DETAILED DESCRIPTION OF THE PREFERRED EMBODIMENTS

With reference to the drawings, an embodiment in which the present invention is applied to a cylindrical lithium-ion secondary battery (non-aqueous secondary battery) will be explained below.

### (Structure)

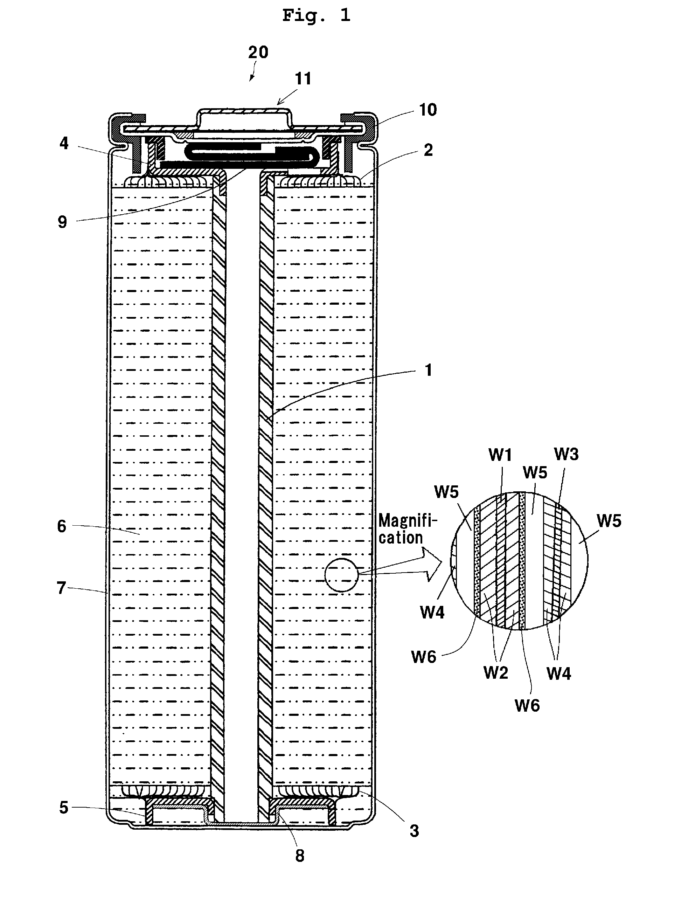

As shown in Fig. 1, a cylindrical lithium-ion secondary battery 20 of this embodiment has a cylindrical battery container 7 made of nickel plated steel and having a bottom. An electrode group 6 is accommodated in the battery container 7. In the electrode group 6, a strip-shapedpositive electrode plate and a strip-shaped negative electrode plate are wound spirally in a cross section through a separator W5 around a hallow cylindrical rod core 1 made of polypropylene.

An aluminum made positive electrode collecting ring 4 for collecting electric potential from the positive electrode plate is disposed at an upper side of the electrode group 6 approximately on an extension line of the rod core 1. The positive electrode collecting ring 4 is fixed to an upper end portion of the rod core 1. Each end portion of positive electrode lead pieces 2 led from the positive electrode plate is welded by ultrasonic welding to a peripheral face of a flange portion extended integrally from a periphery of the positive electrode collecting ring 4. A disc shaped battery lid 11 which houses a safety valve and which functions as a positive electrode external terminal is disposed at an upper side of the positive electrode collecting ring 4. One end of a positive electrode lead 9 is fixed to an upper portion of the positive electrode collecting ring 4 and another end of the positive electrode lead 9 is welded to the bottom face of the battery lid 11. The positive electrode lead 9 is formed by two leads which are configured by stacking a plurality of ribbons made of aluminum and of which ends are welded with each other.

On the other hand, a copper made negative electrode collecting ring 5 for collecting electric potential from the negative electrode plate is disposed at a lower side of the electrode group 6. An outer circumference of a lower end of the rod core 1 is fixed to an inner circumference of the negative electrode collecting ring 5. Each end portion of negative electrode lead pieces 3 led from the negative electrode plate is welded to an outer periphery of the negative electrode collecting ring 5. A copper made negative electrode lead plate 8 used for electric conduction is welded to a lower portion of the negative electrode collecting ring 5. The negative electrode leadplate 8 is welded by resistance welding to an inner bottomportion of the battery container 7. In this embodiment, an outer diameter of the battery container 7 is set to 40mm and an inner diameter thereof is set to 39mm.

The battery lid 11 is fixed by performing caulking via a gasket 10 made of EPDM having insulation and heat resisting properties at an upper portion of the battery container 7. For this reason, the positive electrode lead 9 is accommodated in the battery container 7 in a fold-up manner and an interior of the lithium-ion secondary battery 20 is sealed. Incidentally, the lithium-ion secondary battery 20 is given a function as a battery by carrying out initial charge with a predetermined voltage and current.

### (Non-aqueous Electrolyte)

An unillustrated non-aqueous electrolyte (electrolytic solution) is injected to the battery container 7. A solution that lithium tetrafluoroborate (LiBF₄) as a lithium salt (electrolyte) is added to a mixed solvent of ethylene carbonate (EC) and dimethyl carbonate (DMC) can be used for the non-aqueous electrolyte. In this embodiment, lithium tetrafluoroborate as a lithium salt is added at a ratio of ranging from 0.8 to 1.0 mole/liter (M) to a mixed solvent of ethylene carbonate (EC) and dimethyl carbonate (DMC) mixed at a volume ratio of 2:3. A phosphazene compound of which main constituents are phosphorus and nitrogen can be added to the non-aqueous electrolyte as a flame retardant. When the phosphazene compound is added to the non-aqueous electrolyte, an adding amount is adjusted at a ratio of ranging from 10 to 15 volume% (vol%) to the non-aqueous electrolyte.

The phosphazene compound is a cyclic compound expressed by a general formula of (NPR₂) or (NPR₂)₄. R in the general formula expresses halogen such as fluorine, chlorine and the like or univalent substituent. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, and arylthio group such as phenylthio group and the like may be listed. Such a phosphazene compound decomposes under a high temperature environment such as battery abnormality or the like to exhibit in advance a fire preventing function and then a fire fighting function. The phosphazene compound has a solid state or liquid state according to a kind of the substituent R. The phosphazene compound having a liquid state can be used for the non-aqueous electrolyte.

The electrode group 6 is made in a manner that the positive electrode plate and the negative electrode plate are wound together via a polyethylene-made separator W5 through which lithium-ions can pass each having a thickness of 30µm around the rod core 1 such that both the electrode plates do not come in direct contact with each other. The positive electrode leadpieces 2 and the negative electrode lead pieces 3 are respectively positioned at both end faces opposed to each other with respect to the electrode group 6. The lengths of the positive electrode plate, the negative electrode plate, and the separator W5 are adjusted to set a diameter of the electrode group 6 to 38 ± 0.5mm. Insulating covering or coating is applied in order to prevent electric contact between the electrode group 6 and the battery container 7. An adhesive tape having a base member made of polyimide and adhesive agent made of hexameta-acrylate applied to one surface thereof is used for the insulating covering. The adhesive tape is wound at least one time from a peripheral surface of the flange portion to an outer peripheral surface of the electrode group 6. The winding number is adjusted so that a maximum diameter portion of the electrode group 6 is set as an insulating covering existence portion, and the maximum diameter is set to be slightly smaller than an inner diameter of the battery container 7.

### (Positive Electrode Plate)

The positive electrode plate constituting the electrode group 6 has an aluminum foil W1 having a thickness of 20µm as a positive electrode collector. A positive electrode mixture is applied to both surfaces of the aluminum foil W1 approximately uniformly and homogeneously. As a positive electrode active material, powder of a lithium manganese magnesium complex oxide (LiMn₂₋ₓMgₓO₄, 0<0≦0.1) which has a spinel crystal structure and in which a part of a manganese site (Mn site) in a crystal thereof is replaced by magnesium (Mg) is included in the positive electrode mixture. A thickness of an applied positive electrode mixture layer W2 is approximately uniform and the positive electrode mixture is dispersed in the positive electrode mixture layer W2 approximately uniformly. For example, 8 weight parts of scale-shaped graphite and 2 weight parts of acetylene black as a conductive material, and 5 weight parts of polyvinylidene fluoride (hereinafter abbreviated as PVDF) as a binder, to 100 weight parts of the positive electrode active material, are mixed in the positive electrode mixture. N-methyl-2-pyrolidone (hereinafter abbreviated as NMP) as a dispersion solvent is used for applying the positive electrode mixture to the aluminum foil W1. A non-applied portion of the positive electrode mixture, with a width of 30mm, is formed at one side edge along a longitudinal direction of the aluminum foil W1. The non-applied portion is notched like a comb, and the positive electrode leadpieces 2 are formed by notched remaining portions thereof. In this embodiment, a distance or an interval between the adjacent positive electrode lead pieces 2 is set to 20mm and a width of each of positive electrode lead pieces 2 is set to 5mm. The positive electrode plate, after drying, is pressed and then cut to have a width of 80mm. In this embodiment, a thickness of the positive electrode mixture layer W2 is adjusted to 80µm (per one surface).

Further, a flame retardant layer W6 including a flame retardant is formed at a surface of the positive electrode mixture layer W2, namely, at both surfaces of the positive electrode plate. A phosphazene compound of which main constituents are above-stated phosphorus and nitrogen is used for the flame retardant, but a phosphazene compound having a solid state at a thermal environment of 80 deg. C. or less is used for the flame retardant layer W6. In this embodiment, a mixing percentage of the flame retardant is set at a percentage of ranging from 3 to 20wt% to the positive electrode mixture. This flame retardant layer W6 is formed as follows. Namely, a NMP solution into which the phosphazene compound and PVDF of a binder are dispersed and dissolved is produced. The obtained dispersed solution is applied to the surface of the positive electrode mixture layer W2 of which thickness has been adjusted by press working, and then the dispersed solution is dried. A thickness of the flame retardant layer W6 is adjusted so as a ratio to the thickness of the positive electrode mixture layer W2, namely, (the thickness of the flame retardant layer W6) / (the thickness of the positive electrode mixture layer W2) to fall into a range of from 0.075 to 0.2. In other words, the thickness of the positive electrode mixture layer W2 is about 5 to 13 times as thick as the thickness of the flame retardant layer W6.

### (Negative Electrode Plate)

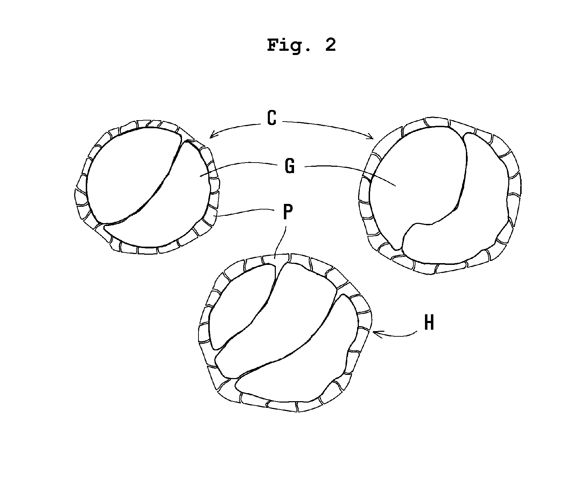

On the other hand, the negative electrode plate has a rolled copper foil W3 having a thickness of 10µm as a negative electrode collector. A negative electrode mixture is applied to both surfaces of the rolled copper foil W3 approximately uniformly and homogeneously. Carbon powder served as a negative electrode active material in/from which lithium-ions can be occluded/released is included in the negative electrode mixture. A thickness of an applied negative electrode mixture layer W4 is approximately uniform and the negative electrode mixture is dispersed in the negative electrode mixture layer W4 approximately uniformly. A carbon material mainly constituted by graphite can be used as a carbon material for the negative electrode active material. In this embodiment, as shown in Fig. 2, a graphite material C that a particle surface of graphite G is coated by pyrolytic carbon P is used. A large number of pores (holes) H are formed at a coating layer of pyrolytic carbon P. Further, the graphite material C has isotropy due to that the surface of graphite G is coated by pyrolytic carbon P and is shaped spherically. For example, 10 weight parts of PVDF as a binder is added, to 90 weight parts of the graphite material C, in the negative electrode mixture. A non-applied portion of the negative electrode mixture, with a width of 30mm, in the same manner as the positive electrode plate, is formed at one side edge along a longitudinal direction of the rolled copper foil W3 to form negative electrode lead pieces 3. In this embodiment, a distance between the adjacent negative electrode lead pieces 3 is set to 20mm and a width of each of negative electrode lead pieces 3 is set to 5mm. The negative electrode, after drying, is pressed and then cut to have a width of 86mm. In this embodiment, a thickness of the negative electrode mixture layer W4 is adjusted to 60µm (per one surface). Incidentally, a length of the negative electrode plate is set, when the positive electrode plate and the negative electrode plate are wound, 120mm longer than that of the positive electrode plate such that the positive electrode plate does not go beyond the negative electrode plate in a winding direction at innermost and outermost winding circumferences. Besides, a width of an applied portion of the negative electrode mixture is set 6mm longer than that of the positive electrode mixture such that the applied portion of the positive electrode mixture does not go beyond the applied portion of the negative electrode mixture in a winding direction and a vertical direction.

### (Effects and the like)

Next, effects and the like of the lithium-ion secondary battery 20 according to this embodiment will be explained.

In this embodiment, the flame retardant layer W6 including the phosphazene compound of a flame retardant is formed respectively at the surface of the positive electrode mixture layer W2 which is applied to both surfaces of the positive electrode plate. For this reason, the flame retardant layer W6 exists near the positive electrode mixture layer W2 which is apt to have a large calorific value due to a decomposition reaction of the active material or a chain reaction thereof at a time of battery abnormality such as overcharge and the like. Thus, even if a battery temperature increases at the time of battery abnormality, the phosphazene compound demonstrates non-flammability. Accordingly, battery behavior becomes calm and safety of the battery can be enhanced.

Further, when the amount of the phosphazene compound included in the flame retardant layer W6 is less than 3wt% to the positive electrode mixture, it is difficult to demonstrate non-flammability sufficiently at the time of battery abnormality. By contrast, when the amount of the phosphazene compound exceeds 20wt%, battery performance drops because electronic conductivity or lithium-ion conductivity is hampered by the flame retardant layer W6. In this embodiment, because the amount of the phosphazene compound included in the flame retardant layer W6 is adjusted to the percentage of ranging from 3 to 20wt%, battery performance is secured at the time of normal charge/discharge and safety is secured at the time of battery abnormality.

Furthermore, in this embodiment, the lithium manganese magnesium complex oxide (LiMn₂₋ₓMgₓO₄, 0<0≦0.1)which has a spinel crystal structure and in which a part of a Mn site in a crystal thereof is replaced by Mg is used as a positive electrode active material. The spinel crystal structure is excellent in thermal stability and can restrict the progress of a decomposition reaction even in a temperature increase at the time of battery abnormality and the like. For this reason, the calorific value in the positive electrode plate is lowered to contribute to securing safety. Further, because the lithium manganese magnesium complex oxide in which a part of a Mn site in a crystal thereof is replaced by Mg can decrease elution of manganese-ions and a crystal structure thereof is strengthened and stabilized more comparing with lithium manganate which is not replaced by Mg, battery performance can be demonstrated for a long time to improve a life span. It is not preferable if the replacing ratio x of Mg exceeds 0.1, because an unstable crystal structure is brought about due to too many amount of Mg in the crystal.

Moreover, in this embodiment, the ratio of the thickness of the flame retardant layer W6 to the thickness of the positive electrode mixture layer W2, namely, (the thickness of the flame retardant layer W6) / ( the thickness of the positive electrode mixture layer W2) is adjusted in the range of from 0.75 to 0.2. Because the thickness of the flame retardant layer W2 is restricted to the thickness of the positive electrode mixture layer W2, lowering in electron conductivity due to the flame retardant layer W6 containing the phosphazene compound which is a non-conductor originally can be restricted, and ionic conductivity can be also secured due to that the flame retardant layer W6 is formedporous by adding the phosphazene compound having a solid state. Accordingly, by restricting the thickness of the flame retardant layer W6 to the thickness of the positive electrode mixture layer W2 to fall into the predetermined range, safety as well as battery performance can be secured.

Furthermore, in this embodiment, in addition to forming the flame retardant layer W6 to the positive electrode plate, the phosphazene compound can be added to the non-aqueous electrolyte. The phosphazene compound exhibits fire preventing and fire fighting functions under a high temperature environment such as battery abnormality or the like. For this reason, due to the phosphazene compound, non-flammability and a self-extinguishing property are given to the non-aqueous electrolyte. Thus, safety of the battery can be enhanced because the battery is easy to be extinguished even if the non-aqueous electrolyte catches fire at the time of battery abnormality such as overcharge and the like or at the time that the battery is exposed to the high temperature environment.

Further, if the adding amount of the phosphazene compound in the non-aqueous electrolyte is less than 10 vol%, there is a case that the battery can not be distinguished when the battery catches fire at the time of battery abnormality. To the contrary, if the adding amount of the phosphazene compound exceeds 15 vol%, battery performance such as capacity, output or the like drops because ionic conductivity in the non-aqueous electrolyte is hampered at the time of normal charge/discharge. In other words, it is advantageous in fire-resistance but disadvantageous in battery performance to make the adding amount of the phosphazene compound large. In this embodiment, because the adding amount of the phosphazene compound in the non-aqueous electrolyte is adjusted to the percentage in the range of from 10 to 15 vol%, battery performance is not only secured at the time of normal charge/discharge but safety can be secured at the time of battery abnormality.

Furthermore, in general, when a manganese-based positive electrode active material such as a lithium manganese complex oxide or the like is used, there is a case that manganese-ions elute from the positive electrode mixture layer W2. Further, the elution amount of manganese-ions is likely to increase when the manganese-based positive electrode active material is used together with the phosphazene compound. In a case that the elution amount of manganese-ions increases, the ratio capable of doping/de-doping of lithium-ions at the side of the positive electrode is decreased to increase irreversible capacity, which brings about a drop in battery capacity. There is also a possibility of causing minute shortcuts due to that the eluted manganese-ions deposit to form dendrite at the side of the negative electrode. In the lithium-ion secondary battery 20 of this embodiment, the elution of manganese-ions can be restricted because LiBF₄ is added as a lithium salt at the ratio of ranging from 0.8 to 1.0M to the non-aqueous electrolyte. Accordingly, batter capacity such as capacity, output or the like can be maintained, and as this result, a long life span of the battery is secured. If the adding amount of LiBF₄ is less than 0.8M, restricting the elution of manganese-ions becomes insufficient and the electron conductivity of the non-aqueous electrolyte also drops, which brings about lowering in battery performance. To the contrary, even if the adding amount of LiBF₄ is increased to a degree of exceeding 1.0M, it is difficult to obtain the effects of restricting the elution of manganese-ions more. Accordingly, it is preferable to set the ratio of LiBF₄ added to the non-aqueous electrolyte at the range of from 0.8 to 1.0M.

Moreover, in this embodiment, the graphite material C mainly constituted by graphite is used as a negative electrode active material. In this graphite material C, the surface of graphite G is coated by pyrolytic carbon P. Amorphous carbon is formed at the coating layer of pyrolytic carbon P, and the graphite material C has isotropy by increasing particles of oriented graphite. Further, a large number of pores H are formed at the coating layer of this pyrolytic carbon P. Accordingly, a battery having flatness of a voltage property due to utilizing graphite and having an excellent charge/discharge property due to that occlusion/release of lithium-ions progresses in an isotropic manner can be obtained. The lithium-ion secondary battery 20 using such a graphite material as a negative electrode active material can decrease a voltage drop at final discharge, and thus the battery 20 can be used preferably as a power source for home or industrial use in which stable output is desired.

As explained above, the lithium-ion secondary battery 20 of this embodiment can secure safety due to forming of the flame retardant layer W6. Further, due to setting of the positive electrode active material, the negative electrode active material and the non-aqueous electrolyte, discharge capacity, particularly a discharge property such as high rate discharge capacity or the like, a life property for demonstrating a battery function for a long time, a voltage property having flatness and restricting a voltage drop at final discharge can be improved. Namely, the lithium-ion secondary battery 20 in this embodiment is excellent in safety and at the same time has excellent battery performance in many sides. By contrast, in the conventional lithium-ion secondary battery, in order to secure safety, a battery constituting material itself has been made non-flammable, for example, by mixing the flame retardant to the non-aqueous electrolyte or separator(s). However, in the lithium-ion secondary battery, because heat generation becomes large due to thermal decomposition reaction of the positive electrode active material, a large amount of the flame retardant is required in order to restrict a temperature increase. If the separators contain a large amount of the flame retardant, it is difficult to retain strength originally required as separators. If the flame retardant is added to the non-aqueous electrolyte, ionic conductivity in the non-aqueous electrolyte becomes insufficient and an output property or a discharge capacity drops. Namely, improving safety brings about a drop in battery performance. Further, in the battery used as a power source for home or industrial use, flatness of a voltage property is desired in view of stable output and stability in the positive or negative electrode active material is also desired in view of stable power supply for a long time.

Incidentally, in this embodiment, an example that the flame retardant layer W6 is formed at the surface of the positive electrode mixture layerW2, namely, at the both surfaces of the positive electrode plate was shown, however, the present invention is not limited to this. The flame retardant layer W6 may be formed at one surface of the positive electrode plate. The same non-flammability effects as this embodiment have been confirmed in such a construction. Further, in this embodiment, an example that the ratio of the thickness of the flame retardant layer W6 to the thickness of the positive electrode mixture layer W2 is adjusted to the range of from 0.075 to 0.2 was shown, however, the present invention is not restricted to this. Considering that the flame retardant layer W6 is disposed between the positive electrode plate and the negative electrode plate, in order to secure safety and battery performance, it is preferable to set the ratio of the flame retardant layer W6 and the positive electrode mixture layer W2 to fall into the above-stated range.

Further, in the lithium-ion secondary battery 20 of this embodiment, the mixed solution of EC and DMC mixed at the volume ratio of 2:3 was explained as an organic solvent of the non-aqueous electrolyte. However, the present invention is not limited to the same. EC and DMC may be contained as an organic solvent usable other than thisembodiment,and diethylcarbonate,polypropylene carbonate, ethyl-methyl carbonate, vinylene carbonate, 1,2-dimethxy ethane, 1,2-diethxy ethane, γ-butyrolactone, tetrahydrofuran, 1,3-dioxolane, 4-methyl-1, 3-dioxolane, diethyl ether, sulfolane, methyl-sulfolane, acetonitrile, propionitrile or the like may be contained thereto. Further, the present invention is not limited in the mixing ratio of the organic solvent. In this embodiment, an example that LiBF₄ as a lithium salt is added at the ratio of ranging from 0.8 to 1.0M to the non-aqueous electrolyte was shown, however, the present invention is not limited to the adding amount of the lithium salt. When restricting the elution of manganese-ions elute out of the lithium manganese complex oxide used for the positive electrode active material and securing conductivity of lithium-ions in the non-aqueous electrolyte are considered, it is preferable to use the non-aqueous electrolyte in which LiBF₄ is added at the ratio of ranging from 0.8 to 1.0M to the mixed solvent of EC and DMC.

Furthermore, an example that 8 weight parts of scale-shaped graphite and 2 weight parts of acetylene black as a conductive material, and 5 weight parts of PVDF as a binder, to 100 weight parts of the positive electrode active material, are mixed as a positive electrode mixture was shown, however, the present invention is not confined to the same. Other conductive material normally used for a lithium-ion secondary battery may be used, or the conductive material may not be used for the battery. Other binder other than PVDF may be used, too. As a binder usable other than this embodiment, polymers of: polytetrafluoroethylene (PTFE), polyethylene, polystyrene, polybutadiene, isobutylene-isopren rubber, nitrile rubber, styrene-butadiene rubber, polysulfide rubber, cellulose nitrate, cyanoethyl cellulose, various latex, acrylonitrile, polyvinyl fluoride, vinylidene fluoride, propylene fluoride, chloroprene fluoride and the like, and a mixture thereof may be listed. Further, it goes without saying that a mixing proportion of each material may be changed.

Moreover, in this embodiment, an example of the spinel-structured lithium manganese magnesium complex oxide which has a spinel crystal structure and in which a part of a manganese site in a crystal thereof is replaced by magnesium as a positive electrode active material was shown, however, the present invention is not restricted to the same. As a positive electrode active material, a lithium manganese transition metal complex oxide having a spinel structure may be used, and for example, a transition metal such as aluminum, cobalt, nickel or the like may be contained thereto other than Mn or Mg. Further, an example that the graphite material C in which the surface of graphite G is coated by pyrolytic carbon P is used as a negative electrode active material was shown, however the present invention is not limited to this. When flatness of a voltage property is considered, it is preferable to use a carbon material mainly constituted by graphite, and for example, a carbon material that particles of amorphous carbon are complexified to a surface of graphite may be used.

Furthermore, in this embodiment, the cylindrical lithium-ion secondary battery 20 was explained. However, this invention is not limited to this. The present invention may be applied to a battery utilizing a non-aqueous electrolyte in general. The shape of a battery is not particularly limited to the embodiment. For example, a square shape or the like may be employed other than the cylindrical shape. Further, the electrode group 6 which is wound by the positive electrode plate and the negative electrode plate was explained. However, the present invention is not restricted to this. For example, an electrode group layered by rectangular positive and negative electrode plates may be employed. Furthermore, the present invention is applicable to a battery having a structure other than the structure that the battery lid 11 is fixed to the battery container 7 by performing caulking in the sealed manner. As an example of such a structure, a battery that positive and negative external terminals penetrate battery lids and the positive and negative external terminals push with each other via the rod core within a battery container may be listed.

### (Examples)

Next, Examples of the lithium-ion secondary battery 20 manufactured according to the above embodiment will be explained below. Incidentally, a lithium-ion secondary battery of Control (Comparative Example) manufactured for making a comparison with Examples will also be explained.

### (Example 1)

As shown in Table 1 below, in Example 1, a lithium manganese magnesium complex oxide (LiMn₂₋ₓMgₓO₄, 0<0≦0.1)which has a spinel crystal structure and in which a part of a Mn site in a crystal thereof is replaced by Mg was used as a positive electrode active material, and the Mg replacing ratio x in the Mn site was set to 0.02. In this lithium manganese magnesium complex oxide, an average particle diameter was 26µm, a BET specific surface area was 0.2m²/g, and a tap density when tapping was repeated 30 times was 1.8g/cm³. After press working was carried out so as the thickness of the positive electrode mixture layer W2 to be set to 80µm per one side of the aluminum foil W1, the flame retardant layer W6 including a phosphazene compound (made by BRIDGESTONE CORP., Product Name: Phoslight (Registered Trademark), solid state) at a percentage of 3wt% was formed so as a thickness thereof to be set to 6µm (per one side) to manufacture the positive electrode plate. The ratio W6/W2 of the thickness of the flame retardant layer W6 to the thickness of the positive electrode mixture layer W2 was 0.075. While, graphite material C that a particle surface of graphite G is coated by pyrolytic carbon P was used as a negative electrode active material. In the graphite material C of the negative active material, an average particle diameter was 24µm, a BET specific surface area was 19m²/g, and a tap density when tapping was repeated 30 times was 0.9g/cm³. Press working was carried out so as the thickness of the negative electrode mixture layer W4 to be set to 60µm per one side of the rolled copper foil W3 to manufacture the negative electrode plate. A non-aqueous electrolyte that lithium tetrafluoroborate is added at a ratio of 0.8M to a mixed solvent of EC and DMC mixed at a volume ratio of 2:3 was used to obtain the lithium-ion secondary battery 20 of Example 1.

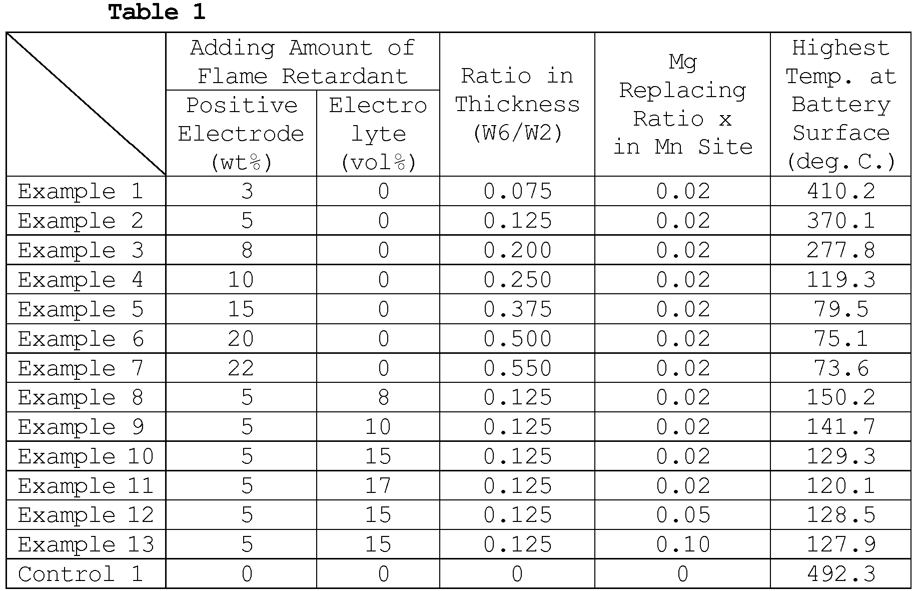

### (Example 2 to Example 7)

As shown in Table 1, in Examples 2 to 7, each lithium-ion secondary battery 20 was obtained in the same manner as Example 1 except changing in the percentage of the phosphazene compound included in the flame retardant layer W6 of the positive electrode plate and the ratio W6/W2 of the thickness of the flame retardant layer W6 to the thickness of the positive electrode mixture layer W2. Namely, the adding amount of the phosphazene compound was adjusted to 5wt% in Example 2, 8wt% in Example 3, 10wt% in Example 4, 15wt% in Example 5, 20wt% in Example 6 and 22wt% in Example 7, respectively. Further, the ratio W6/W2 in thickness was adjusted to 0.125 in Example 2, 0.200 in Example 3, 0.250 in Example 4, 0.375 in Example 5, 0.500 in Example 6 and 0.550 in Example 7, respectively. Because the thickness of the positive electrode mixture layer W2 was set to 80µm, the thickness of the flame retardant layer W6 was 10µm in Example 2, 16µm in Example 3, 20µm in Example 4, 30µm in Example 5, 40µm in Example 6 and 44µm in Example 7, respectively.

### (Example 8)

As shown in Table 1, in Example 8, a lithium-ion secondary battery 20 was obtained in the same manner as Example 2 except adding the phosphazene compound (made by BRIDGESTONE CORP., Product Name: Phoslight (Registered Trademark), liquid state) of a flame retardant to the non-aqueous electrolyte. The adding amount of the phosphazene compound in the non-aqueous electrolyte was adjusted to 8vol%.

### (Example 9 to Example 11)

As shown in Table 1, in Examples 9 to 11, each lithium-ion secondary battery 20 was obtained in the same manner as Example 8 except changing in the adding amount of the phosphazene compound to the non-aqueous electrolyte. Namely, the adding amount of the phosphazene compound was adjusted to 10vol% in Example 9, 15vol% in Example 10 and 17vol% in Example 11, respectively.

### (Example 12 and Example 13)

As shown in Table 1, in Examples 12 and 13, each lithium-ion secondary battery 20 was obtained in the same manner as Example 10 except changing in the Mg replacing ratio x in Mn site of the lithium manganese magnesium complex oxide served as a positive electrode active material. The Mg replacing ratio x in Mn site was 0.05 in Example 12 and 0.10 in Example 13, respectively.

### (Control 1)

As shown in Table 1, in Control 1, a lithium-ion secondary battery was obtained in the same manner as Example 1 except that a positive electrode was manufactured by using lithium manganate (LiMn₂O₄) which is not replaced by magnesium as a positive electrode active material and without forming the flame retardant layer W6 and that lithium hexafluorophosphate (LiPF₆) was used as a lithium salt for a non-aqueous electrolyte. Namely, Example 1 is a conventional lithium-ion secondary battery that no phosphazene compound is included in both of the positive electrode plate and the non-aqueous electrolyte.

### (Test 1)

An overcharge test was carried out for evaluation with respect to each of the lithium-ion secondary batteries of Examples and Control. In the overcharge test, a thermocouple was disposed at a center of each of the lithium-ion secondary batteries to measure a temperature at each surface of the batteries when the batteries were being overcharged at a current value of 0.5C. The highest temperature of each surface of the batteries in the overcharge test is also shown in Table 1.

As shown in Table 1, in the lithium-ion secondary battery of Control 1 that the flame retardant was not contained in both of the positive electrode plate and the non-aqueous electrolyte, the highest temperature at a battery surface reached 492.3 deg. C. in the overcharge test. While, in each lithium-ion secondary batter 20 of Examples 1 to 7 that the flame retardant layer W6 was formed in the positive electrode plate and in each lithium-ion secondary batter 20 of Examples 8 to 13 that the flame retardant layer W6 was formed in the positive electrode plate and the phosphazene compound is added also to the non-aqueous electrolyte, it was understood that the highest temperature at the battery surface was lowered in each battery. It was also understood that a degree that the highest temperature at the battery surface is lowered became large by adding the phosphazene compound to the non-aqueous electrolyte in addition to forming the flame retardant layer W6. When restricting a thermal decomposition reaction of the positive electrode active material and a chain reaction thereof (thermal runaway reaction) are considered, it is preferable that the highest temperature at the battery surface is controlled at about 150 deg. C. or less. This can be attained by setting the mixing percentage of the flame retardant in the flame retardant layer W6 to 10wt% ormore. (Examples 4 to 7) However, because the lithium-ion secondary battery 20 of Example 7 that the adding amount of the phosphazene compound in the flame retardant layer W6 was set to 22wt% dropped in battery capacity, it was understood that that it is preferable that the adding amount of the phosphazene compound in the flame retardant layer W6 falls into a range of from 10 to 20wt% in order to secure both of battery performance and safety. Further, it became obvious that the highest temperature at the battery surface can be controlled at about 150 deg. C. or less in the overcharge test even if the adding amount of the phosphazene compound in the flame retardant layer W6 is set to about 5wt%, provided that the phosphazene compound is added to the non-aqueous electrolyte.

### (Test 2)

Each of the lithium-ion secondary batteries of Examples and Control was disassembled, after leaving them as they are for one month under an environment of 50 deg. C., to measure an amount of manganese-ions in the non-aqueous electrolyte with ICP (Inductively Coupled Plasma). A relativization (relative ratio) of an amount of manganese-ions in each of the lithium-ion secondary batteries 20 of Examples to an amount of manganese-ions in the lithium-ion secondary battery of Control 1 was defined as a Mn elution ratio. Further, after setting each of the lithium-ion secondary batteries of Examples and Control to a full-charged state, a burst of the batteries and a fire-catching property of a gas or the like gushed out of the batteries were confirmed by heating the batteries by a burner. The Mn elution ratio and the results of the burner test are shown in Table 2 below.

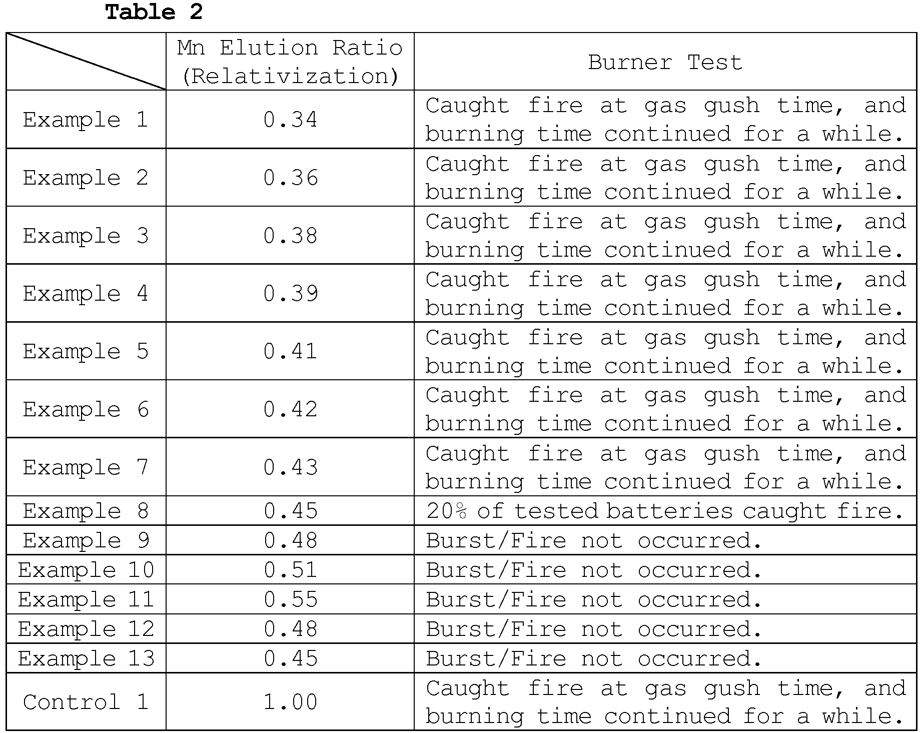

As shown in Table 2, it was understood that Examples 1 to 13 that LiBF₄ was used as a lithium salt in the non-aqueous electrolyte could lower the Mn elution ratio comparing with Control 1 that LiPF₆ was used. Further, Examples 8 to 11 that the phosphazene compound was added to the non-aqueous electrolyte could restrict the burst of the batteries and the fire-catching property of a gas or the like gushed out of the batteries at the time of burner heating comparing with Examples 2 to 7 that the phosphazene compound was not added to the non-aqueous electrolyte. Particularly, it was understood that fire-catching can be prevented securely by setting the adding amount of the phosphazene compound in the non-aqueous electrolyte to 10vol% or more. However, it was confirmed that the amount of Mn elution increased in proportion to an increase in the amount of the phosphazene compound. While, it was understood that, from the results of Examples 12 and 13, the amount of Mn elution could be restricted more by making the Mg replacing ratio x in the Mn site large when compared with the lithium manganese magnesium complex oxide used for a positive electrode active material in the lithium-ion secondary battery 20 of Example 1. Furthermore, in Example 8 that the adding amount of the phosphazene compound in the non-aqueous electrolyte is less than 10vol%, 20% of the batteries caught fire at the time of burner heating. By contrast, in Example 11 that the adding amount of the phosphazene compound in the non-aqueous electrolyte exceeds 15vol%, it became obvious that the burst of the battery and fire-catching of a gas or the like gushed out of the battery at the time of burner heating can be restricted but the amount of Mn elution is increased.

For the foregoing, it was discovered that manganese elution can be restricted and at the same time safety can be secured by adding the phosphazene compound to the non-aqueous electrolyte at the percentage of ranging from 10 to 15vol%. Further, it was found that manganese elution can be restricted by using LiBF₄ as a lithium salt for the non-aqueous electrolyte comparing with a case of using LiPF₆. Furthermore, it was found that the amount of Mn elution canbe restricted by making the Mg replacing ratio x in the Mn site large.

### (Test 3)

An evaluation was carried out by measuring discharge capacity with respect to each of the lithium-ion secondary batteries of Examples and Control. In measuring of discharge capacity, after each of the lithium-ion secondary batteries was charged at a current value of 0.5C, a discharge capacity was measured when each of the lithium-ion secondary batteries was discharged at a current value of 1.0C and 3.0C. Each relative capacity when the discharge capacity of the lithium-ion secondary battery of Control is defined by 100% was calculated. The measuring results of the discharge capacity ratio were shown in Table 3 below.

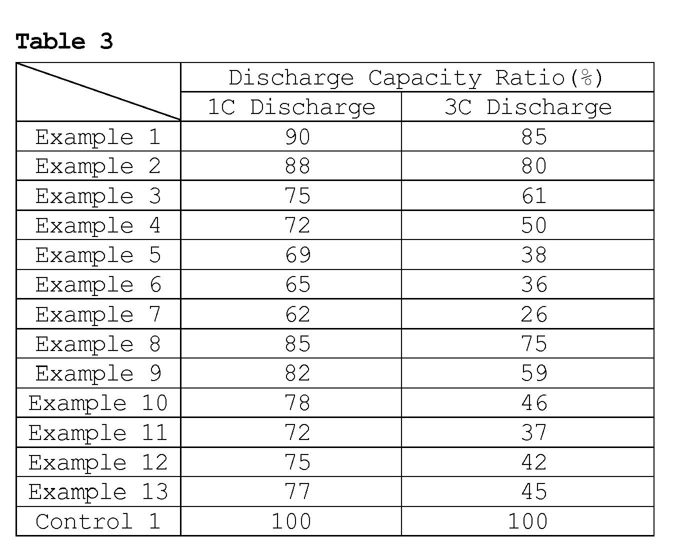

As shown in Table 3, in each of the lithium-ion secondary batteries of Examples 1 to 7 that the flame retardant layer W6 was formed at the surface of the positive electrode mixture layer W2, a drop in discharge capacity was observed at both 1C discharge and 3C discharge comparing with the lithium-ion battery of Control 1 that the flame retardant layer W6 was not formed. The drop in the discharge capacity is caused by forming the flame retardant layer W6. However, it was confirmed that Examples 1 to 3 that the ratio W6/W2 of thickness is set to a range of from 0.075 to 0.200 could secure a discharge capacity of 75 to 90% at a 1C discharge and 61 to 85% at a 3C discharge. This reason is considered that an occlusion/release property of lithium-ions is secured by the carbon material used as a negative electrode active material, namely, the graphite material C in which the surface of graphite G is coated by pyrolytic carbon P and which has isotropy in addition to restricting the ratio of the thickness of the flame retardant layer W6 to the thickness of the positive electrode mixture layer W2. Further, in each of the lithium-ion secondary batteries 20 of Examples 8 to 11 that the phosphazene compound was added also to the non-aqueous electrolyte, a drop in the discharge capacity was observed at both the 1C discharge and the 3C discharge comparing with the lithium-ion battery 20 of Example 2 that the phosphazene compound was not added to the non-aqueous electrolyte. Furthermore, it was understood that, in each of the lithium-ion secondary batteries 20 of Examples 12 and 13 that the Mg replacing ratio x in the Mn site of the lithium manganese magnesium complex oxide served as a positive electrode active material was set to 0.05 and 0.10, respectively, a drop in discharge capacity caused by adding the phosphazene compound to the non-aqueous electrolyte was restricted.

### (Industrial Applicability)

Because the present invention provides a non-aqueous electrolyte battery capable of flattening of a voltage property and securing safety at a time of battery abnormality, the present invention contributes to manufacturing and marketing of a non-aqueous electrolyte battery. Accordingly, the present invention has industrial applicability.

## Claims

1. A non-aqueous electrolyte battery that a positive electrode having a positive electrode mixture layer including a positive electrode active material and a negative electrode having a negative electrode mixture layer including a negative electrode active material are infiltrated by a non-aqueous electrolyte, wherein the positive electrode active material is a lithium manganese transition metal complex oxide, the negative electrode active material is a carbon material mainly constituted by graphite and the non-aqueous electrolyte contains lithium tetrafluoroborate as a lithium salt, and wherein, in the positive electrode, a flame retardant layer including a phosphazene compound of a flame retardant is formed at a surface of one side or both sides of the positive electrode mixture layer.

2. The non-aqueous electrolyte battery according to claim 1, wherein the lithium manganese transition metal complex oxide is replaced by magnesium at a part of a manganese site in a crystal thereof and has a spinel crystal structure.

3. The non-aqueous electrolyte battery according to claim 2, wherein the lithium manganese transition metal complex oxide is expressed by a chemical formula of LiMn₂₋ₓMgₓO₄ and a replacing ratio x of the magnesium in the chemical formula satisfies 0<x≦0.1.

4. The non-aqueous electrolyte battery according to claim 3, wherein the carbon material is graphite of which surface is coated by pyrolytic carbon.

5. The non-aqueous electrolyte battery according to claim 4, wherein the carbon material has isotropy.

6. The non-aqueous electrolyte battery according to claim 5, wherein the carbon material is shaped spherically.

7. The non-aqueous electrolyte battery according to claim 1, wherein a thickness of the flame retardant layer ranges from 0.075 to 0.2 at a ratio to a thickness of the positive electrode mixture.

8. The non-aqueous electrolyte battery according to claim 1, wherein, in the non-aqueous electrolyte, a mixed solvent including at least ethylene carbonate and dimethyl carbonate is used as an organic solvent for dissolving the lithium salt.

9. The non-aqueous electrolyte battery according to claim 8, wherein, in the non-aqueous electrolyte, the lithium tetrafluoroborate is added at a ratio of ranging from 0.8 mol/liter to 1.0 mol/liter to a mixed solvent of ethylene carbonate and dimethyl carbonate.

10. The non-aqueous electrolyte battery according to claim 9, wherein the non-aqueous electrolyte further contains a phosphazene compound of a flame retardant.
